# EUROPEAN PATENT APPLICATION

(11) **EP 1 088 776 A1**
(43) Date of publication of application: **04.04.2001**
(21) Application number: 00660171.0
(22) Date of filing: 29.09.2000
(51) Int. Cl.: B65G 25/08

(54) **Stair-like log feeder**

(30) Priority: 01.10.1999 FI 992117
(71) Applicant: Kongan Teollisuuskone OY, 52700 Mäntyharju (FI)
(72) Inventor: Rusinen, Jyrki, 52700 Mäntyharju (FI)
(74) Representative: Helke, Kimmo Kalervo

(57) **Abstract**

The invention relates to a stair-like log feeder, which is intended to feed raw timber (11) singly to a transportation device (12). The stair-like log feeder includes a frame (14), two stepped structures (13, 13') arranged to overlap each other, longitudinal support arms (15, 15') pivoted to the frame (14), and an operating device (33) connected to a jointed construction (28) for moving the stepped structure. According to the invention, the support arms (15, 15') of both stepped structures (13, 13') are supported from their first ends (16, 16') from the frame (14) in essentially the same line. The second ends (17, 17') are attached rigidly to the stepped structures (13, 13'). In addition, the length of the support arms (15, 15') is 6 - 8 times the stroke of a step (18) of the corresponding stepped structure (13, 13').

## Description

The present invention relates to a stair-like log feeder, which is intended to be used particularly in the processing chain of a sawing plant, for feeding raw timber singly from a transportation device preceding the stair-like log feeder to a transportation device after the stair-like log feeder, which stair-like log feeder includes a frame supporting two stepped structures arranged to overlap each other, longitudinal support arms pivoted to the frame to support the stepped structure, and an operating device connected to a pivoted construction for moving the stepped structure.

Modern sawing plants for raw timber, such as logs, are largely automated. Generally, the raw timber is handled in large batches, but the logs must be fed to the saw absolutely one at a time. For this purpose, before the saw's feed conveyor, there is usually a stair-like log feeder, which lifts the logs one at a time onto the feed conveyor. Before the stair-like log feeder there is also a log table, onto which several logs at are lifted, for example, using a wheeled loader. The log table feeds the stair-like log feeder, which then lifts the logs one at a time onto the saw's feed conveyor.

US patent number 5,351,729 discloses a stair-like conveyor, in which there are two stepped structures. The first stepped structure made of sheet metal is attached to the frame of the stair-like log feeder as a non-moving part. The other box-construction stepped structure is supported at both ends by means of two support arms, so that a pivoted parallelogram is formed. In this case, the feeding movement of the second stepped structure is in an arc. The feeding movement is created by means of an electric motor, which is connected by a pivoted construction to the second stepped structure.

In the stair-like log feeder in question, the entire moving stepped structure together with the logs is moved by an electric motor. The feeding movement thus demands a very powerful motor. In addition, the loading of the electric motor is uneven, because during the return movement the logs do not move when the stepped structure moves to the lower angled position. Generally, an attempt is made to manufacture the stepped structure to be as light as possible, so that the power required would be correspondingly as small as possible. The light, but stiffly-supported stepped structure is also subject to impact loads, especially after the log table, which both wears and breaks the structures. The stepped structure is also a single fixed totality, which is thus difficult to install and maintain. In addition, it is impossible to change the size of the steps to suit the size of the raw timber. The stepped structure must also be made unnecessarily stiff, as the support arms are only in its ends.

It is also possible for both stepped structures to move. Such a stair-like log feeder is disclosed in US patent number 5,653,570. In the stair-like log feeder disclosed, both stepped structures are supported from the frame by means of guides. The feeding movement of the stepped structures is thus linear. In this case too, the stepped structures are fixed totalities, which are difficult to install and repair. The operating device drives the stepped structures, which are connected to each other. A great deal of power is then needed, because, in addition to the logs, both stepped structures must be lifted. Here too, the operating device is unevenly loaded.

In both stair-like log feeders, the length of the feeding movement cannot be adjusted simply. In addition, the operating devices that are located in the centre of the stair-like log feeders are difficult to service and examine and must be protected especially from material falling from above.

The present invention is intended to achieve a stair-like log feeder that is more durable than before, but which has a simpler construction and more diverse operations, and which requires less power than before. The characteristic features of the invention appear in the accompanying Claims. In a stair-like log feeder according to the invention, the stepped structures are supported by numerous support arms, so that the width of the stair-like log feeder is not limited. In addition, the stepped structures are connected to each other, so that their mass can be exploited to move each other. This substantially reduces the power requirement. The support of the stepped structures also permits small dimensional errors, which facilitates installation. At the same time, the stair-like log feeder will also withstand impact stresses without wearing. The operating device is also advantageously located for maintenance and operation. The dimensioning of the jointed construction allows the movement of the operating device to be short, so that a considerably higher feed speed than before is achieved. Besides the higher feed speed, it is also simple to alter the feed travel. Correspondingly, it is possible to adapt the entire stair-like log feeder to suit the diameter class of each kind of raw timber.

In the following, the invention is described with reference to the accompanying drawings, which show one embodiment of the invention, in which
- Figure 1: shows a diagrammatic drawing of a stair-like log feeder according to the invention, seen from the side, at the extreme end of its feed movement,
- Figure 2: shows the stair-like log feeder of Figure 1 at the opposite end of its feed movement,
- Figure 3: shows a diagrammatic drawing of a stair-like log feeder according to the invention, seen from in front,
- Figure 4: shows a diagrammatic drawing with an axonometric view of the construction of one joint of a stair-like log feeder according to the invention,
- Figure 5: shows one joint point in greater detail, with the support arm removed.

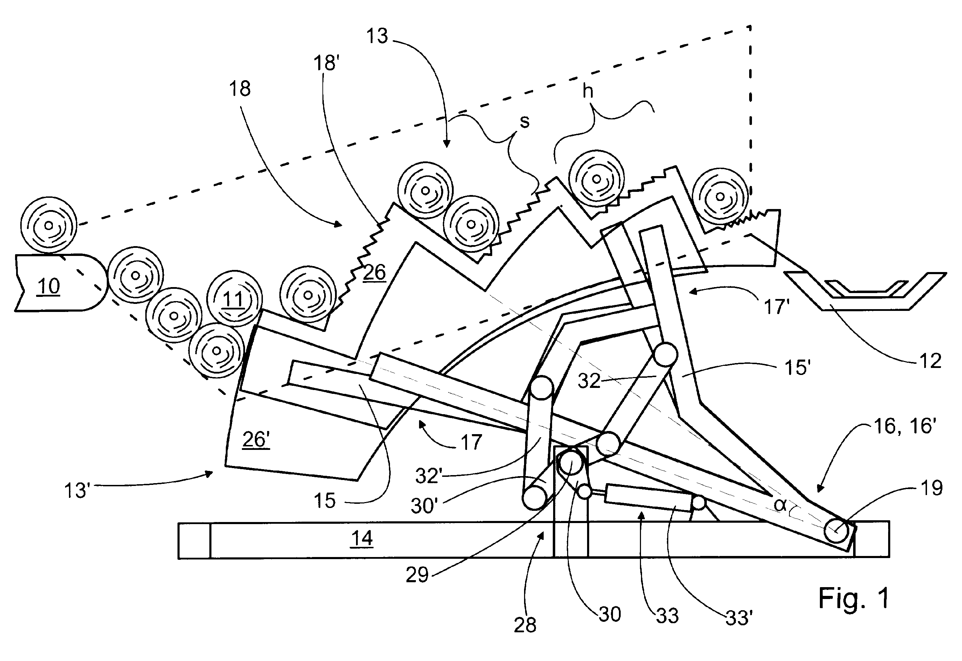

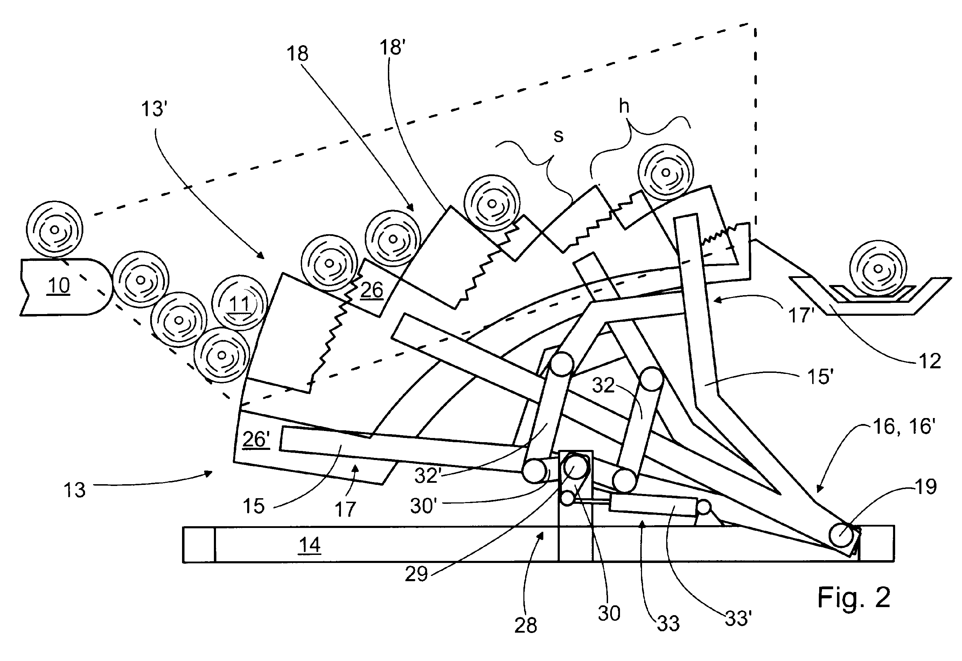

Figures 1 and 2 show a side view of a stair-like log feeder according to the invention. For reasons of clarity, the stair-like log feeder has been simplified and its guards, for example, are not shown. In this case, the stair-like log feeder is fed by log table 10, to which several logs 11 at a time are brought by, for example, a wheeled loader (not shown). In turn, the stair-like log feeder feeds the saw's feed conveyor 12 with one log at a time. The feeding movement is achieved by means of two stepped structures 13 and 13' arranged to overlap each other, which move in essentially opposing phases. Despite the backwards and forwards movement of the stepped structures, the log moves continuously forwards from one stepped structure to the other towards the feed conveyor.

The operating principle of the stair-like log feeder is, as such, known. However, the stair-like log feeder according to the invention differs clearly from known feeders in both its construction and its properties. According to the invention, both stepped structures 13 and 13' are supported from the frame 14 by means of support arms 15 and 15'. In this case, support arms 15 and 15' are triangular support arms, but separate support arms can also be used. Support arms 15 and 15' are, however, jointed from their first ends 16 and 16' to frame 14 on essentially one and the same line. The second ends 17 and 17' of support arms 15 and 15' are attached rigidly to stepped structures 13 and 13'. Thus, the path of movement of the stepped structures is arced, with the joint points essentially on the same line. In addition, the length of support arms 15 and 15' is 4 - 12, preferably 6 - 8 times the length of stroke of step 18 of the corresponding stepped structure. In that case, even a small change in the angle of the support arm will create a significant length of stroke in the stepped structure.

In addition to the arced feeding movement, the separation ability of the stair-like log feeder is improved by the shape of the steps of the stepped structures. Generally, the centre point of the curvature of the front edge 18' of each step 18 is essentially on the joint line of the support arms. In addition, the height of the separate steps h is essentially determined by the same angle α. In practice, the said angle α is 10° - 20°, preferably 13° - 17°. In addition, the radius at which the support arm is set from the pivot point, and which determines the depth s of the step, also diminishes in stages of 10 - 20 %, preferably 13 - 17 % in the feed direction of the stair-like log feeder. The height and depth of the steps then diminish according to Figures 1 and 2, further improving the separation ability of the stair-like log feeder and its adaptability to logs of different size classes.

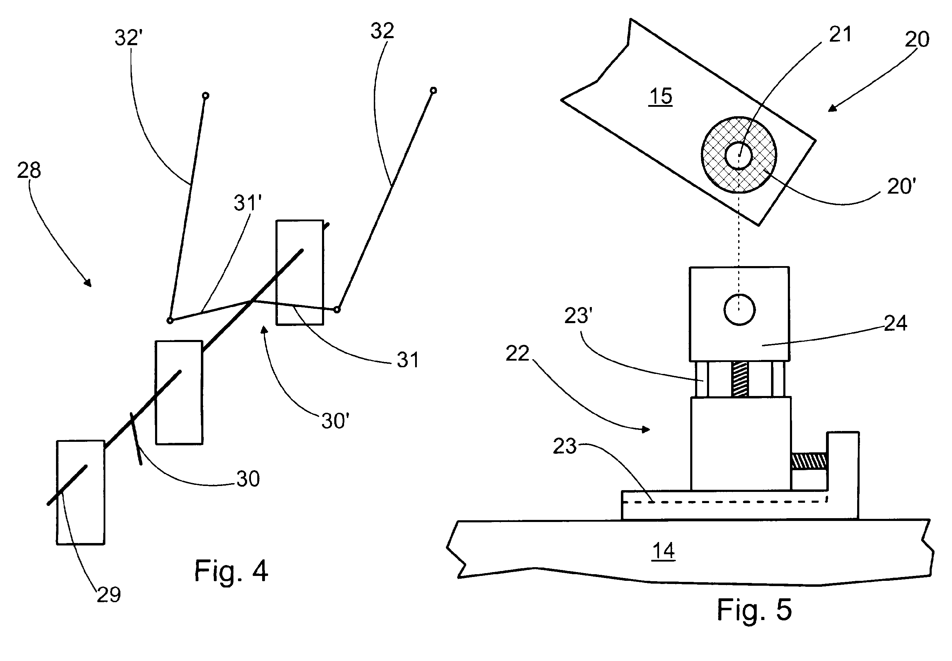

Particularly logs 11 falling from log table 10 cause repeated impacts on the stepped structures 13 and 13'. In order to prevent breakage, there is a bearing member 20 in pivot point 19 of both support arms 15 and 15', in which a elastic member 20', which permits a small movement in the support arm, is arranged. This dampens the impacts and does not load the operating device. Elastic device 20' also permits small dimensional and directional errors, which increases installation tolerances and facilitates installation. In its simplest form, the elastic member is a rubber bush fitted around pivot pin 21 (Figure 5). In this case, the rubber bush is attached to the end of support arm 15. Preferably all the support arms are thus pivoted on essentially the same line. In connection with bearing member 20, however, there may be an adjustment member 22, for setting pivot joint 19 in the cross-sectional plane of the stair-like log feeder (in the plane of Figures 1 and 2). By means of a small setting tolerance, each support arm can be set to the desired point. Due to the length of the support arm, even a small movement of the pivot point (a few tens of millimetres) will have a significant effect of the location of the steps. In Figure 5, axle pin 21 is attached by means of guides 23 and 23' to a moveable lug 24. Guides 23 and 23' and lug 24 form adjustment member 22, which is attached to frame 14. The adjustment members can be used to adjust the stepped structures in different ways in relation to each other, which fact can be used when regulating the separation ability of the stair-like log feeder.

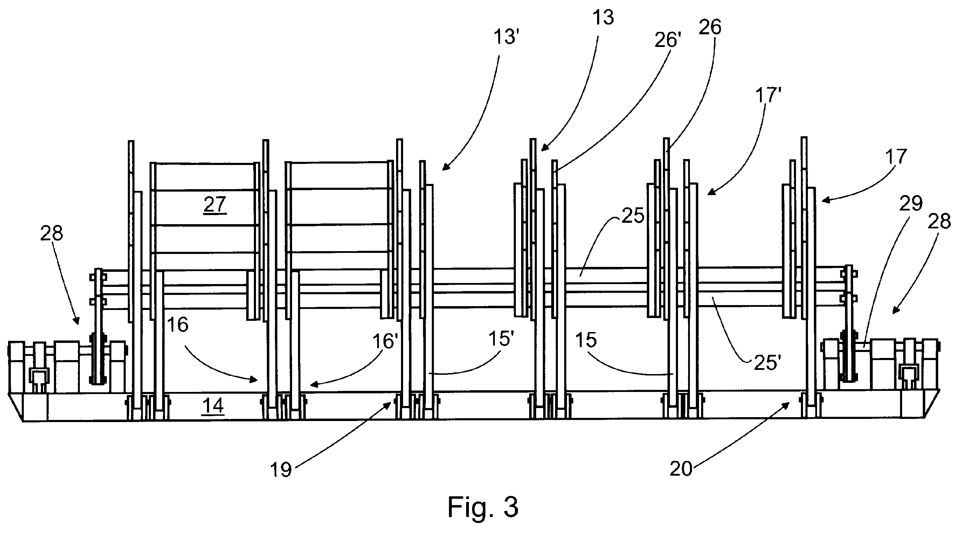

Figure 3 shows a simplified front view of a stair-like log feeder according to the invention. According to the invention, each stepped structure 13 and 13' is mainly formed of transverse supports 25 and 25' connecting support arms 15 and 15' and of step pieces 26 and 26' detachably attached to support arms 15 and 15'. Naturally, one transverse support only connects the support arms of one stepped structure, so that the stepped structures can move in relation to each other. Figure 3 shows only one transverse support 25 and 25' of each stepped structures 13 and 13'. In practice, both the step pieces and the transverse supports are detachably attached to the support arms by means of, for example, screw joints. Thus, a stair-like log feeder can be assembled from small modular components. In other words, in each stepped structure, there are many support arms, of which there are generally from one to two in each metre of width. Thus, it is possible to use support arms of the same thickness in stair-like log feeders of different widths, without the stepped structures ever significantly bending. The step pieces made from sheet material can also be simply changed for those of a different type, when an optimal feed and separation capacity will be achieved for all size classes. Broken or worn step pieces can also be easily replaced singly. For reasons of illustration, Figure 3 shows only the spacer plates 27 attached to the two lowest step pieces 26' of stepped structure 13'. By means of the spacer plates 27, the stair-like log feeder forms an essentially closed construction, so that logs that possible arrive at a slant cannot get between the structures. Only small gaps remain between the stepped structures.

In addition to support arms 15 and 15', the stepped structures 13 and 13' are supported by means of special pivot constructions 28. The pivot constructions 28 arranged at each end of the stair-like log feeder are located in the lateral direction essentially outside the stepped structure, according to Figure 3. Thus, the points requiring service are easily accessible and loose material is not a problem. Besides giving support, pivot construction 28 is used to transmit the power of operating device 33 to the stepped structures 13 and 13'. In this case, pivot construction 28 includes a transmission shaft 29, set in bearings to lie essentially parallel to the pivot line of the support arms, and two cranks 30 and 30' secured non-rotatably to each of its ends. The first crank 30 is fitted onto operating device 33. The second crank 30' has two essentially opposed forks 31 and 31', each of which is connected by means of pivoted arms 32 and 32' to a different stepped structure 13 and 13'. The stepped structures are then in equilibrium, so that the power requirement of the operating device only corresponds to the mass of the logs to be lifted at any one time. Correspondingly, the mass of the stepped structures in no way stresses the operating device, but instead loads the transmission shaft, which can be easily attached to the frame with sturdy bearings.

Besides balancing the stepped structures, the pivot construction is used to achieve a suitable transmission ratio. In other words, a small stroke of the operating device can be used to achieve a sufficient stroke in the steps. At the same time, the separation speed of the stair-like log feeder increases. Generally, the functional length of crank 30 is 55 - 90 %, preferably 65 - 80 % of the functional length of fork 31 or 31' of the other crank 30'. In addition, the functional length of pivot arms 32 and 32' is 2,7 - 3,6 times, preferably 2,9 - 3,4 times the functional length of crank 30. Figure 4 shows a diagram of pivot construction 28 according to the invention. Operating device 33 is preferably a hydraulic cylinder 33' with a stroke of 100 - 400 mm, preferably 150 - 350 mm. In known hydraulically operated stair-like log feeders, the cylinder stroke is 500 - 1000 mm.

In the stair-like log feeder according to the invention, impact-resistance has been improved not only with flexible support, but also by increasing the mass. When the total mass is clearly greater than the mass of the logs, impacts will not stress the structures. A massive construction will also not vibrate as a result of impacts. The operation of the stair-like log feeder is then even and undisturbed. The mass can be easily increased without an increase in the power requirement, as the stepped structures are in equilibrium. On the other hand, the mass of the logs determines the power requirement. A stair-like log feeder according to the invention can weigh as much as 15 000 kilos, whereas known stair-like log feeders of comparable size weigh only as much as 5000 kilos. At the same time, however, the power requirement is only one-tenth of that of previous feeders.

Despite the reduction in power requirement, the stair-like log feeder achieves a considerable feeding speed. Thanks to the transmission ration of the pivot construction, the working movement required in the operating device is small. Correspondingly, the time required for the working movement is short. The effective feed rate of the stair-like log feeder can then be as much as 50 logs a minute, whereas in known stair-like log feeders it is only 15 - 20 logs a minute. Despite the speed, the separation ability remains good, thanks to the path of the stepped structures and the shape of the steps.

Figures 1 and 2 shows the location of some logs at different stages of the stepped structures. Due to the dimensioning of the steps, there may be even several logs on the lower steps, but at the final stage there is one, and only one log on the steps. The dimensioning of the step pieces and adjusting the pivot points the stair-like log feeder can be adapted for logs of different size. In addition, the stroke of the stepped structures can be easily adjusted, if an operating device with a reciprocating action, such as a hydraulic cylinder, is used. Suitable sensors can also be used to monitor the path of the crank, in order to set the correct stroke.

A stair-like log feeder according to the invention is faster than previously, though its power requirement is, however, smaller. The stair-like log feeder also lasts for longer without wear and its components can be replaced individually. In addition, the stair-like log feeder has an excellent separation ability and can be used with logs of a butt diameter of 10 - 60 cm.

## Claims

1. A stair-like log feeder, which is intended to be used particularly in the processing chain of a sawing plant, for feeding raw timber (11) singly from a transportation device (10) preceding the stair-like log feeder to a transportation device (12) after the stair-like log feeder, which stair-like log feeder includes a frame (14) supporting two stepped structures (13, 13') arranged to overlap each other, longitudinal support arms (15, 15') pivoted to the frame (14) to support the stepped structure, and an operating device (33) connected to a jointed construction (28) for moving the stepped structure, characterized in that the support arms (15, 15') arranged in both stepped structures (13, 13') are supported from their first ends (16, 16') from the frame (14) in essentially the same line, while the second ends (17, 17') are attached rigidly to the stepped structures (13, 13'), and that the length of the support arms (15, 15') is 4 - 12, preferably 6 - 8 times the stroke of a step (18) of the corresponding stepped structure (13, 13').

2. A stair-like log feeder according to Claim 1, characterized in that the steps (18) of both stepped structures (13, 13') are curved in such a way that the centre point of the curvature of the front edge (18') of each step (18) is essentially on the pivoting line of the support arms (15, 15'), while the height (h) of the separate steps (18) essentially subtending the same angle (α).

3. A stair-like log feeder according to Claim 2, characterized in that the said angle (α) is 10° - 20°, preferably 13° - 17°, while the radius determining the depth of the step (18) and centred on the pivot point (19) of the support arm (15, 15') diminishing in the feed direction of the stair-like log feeder in 10 - 20 %, preferably 13 - 17 %-stages.

4. A stair-like log feeder according to Claim 1, characterized in that, at the pivot point (19) of each support arm (15, 15'), there is a bearing member (20), in connection with which an elastic member (20') is arranged, permitting movement by the support arm (15, 15').

5. A stair-like log feeder according to Claim 4, characterized in that, in connection with the bearing member (20), there is an adjustment member (22) for setting the pivot point (19) particularly in the cross-sectional plan of the stair-like log feeder.

6. A stair-like log feeder according to one of Claims 1 - 5, characterized in that the principal components of each stepped structure (13, 13') are formed by transverse supports (25, 25') connecting the support arms (15, 15') and step pieces (26, 26') detachably attached to the support arms (15, 15'), of which support arms (15, 15') there are 1 - 2 pieces to each metre of width of the stepped structure (13, 13').

7. A stair-like log feeder according to one of Claims 1 - 6, characterized in that, at each end of the stair-like log feeder, pivot constructions (28) are arranged, both of which are located essentially outside of the stepped structure (13, 13') in the lateral direction.

8. A stair-like log feeder according to one of Claims 1 - 7, characterized in that the pivot construction (28) includes a transmission shaft (29) set in bearing essentially parallel to the pivot line of the support arms (15, 15') with two cranks (30, 30') attached non-rotatably at each of its ends.

9. A stair-like log feeder according to Claim 8, characterized in that the first crank (30) is fitted to the operating device (33) and the second crank (30') has two essentially opposed forks (31, 31'), each of which is connection with the aid of pivot arms (32, 32') to a different stepped structure (13, 13').

10. A stair-like log feeder according to Claim 8, characterized in that the functional length of the first crank (30) is 55 - 90 %, preferably 65 - 80 % of the functional length of the fork (31, 31') of the second crank (30').

11. A stair-like log feeder according to Claim 9, characterized in that the functional length of the pivot arms (32, 32') is 2,7 - 3,6 times, preferably 2,9 - 3,4 times the functional length of the first crank (30).

12. A stair-like log feeder according to one of Claims 1 - 11, characterized in that the operating device (33) is a work cylinder (33'), with a stroke of 100 - 400 mm, preferably 150 - 350 mm.
